# EUROPEAN PATENT APPLICATION

(11) **EP 4 300 072 A1**
(43) Date of publication of application: **03.01.2024**
(21) Application number: 23181940.0
(22) Date of filing: 28.06.2023
(51) Int. Cl.: G01N 1/30, C09D 11/54, B41M 5/00

(54) **STAINING METHOD, LIQUID COMPOSITION FOR STAINING, AND KIT FOR STAINING**

(30) Priority: 01.07.2022 JP 2022107361; 23.06.2023 JP 2023103678
(71) Applicant: CANON KABUSHIKI KAISHA, Tokyo 146-8501 (JP)
(72) Inventor: TOMINAGA, Akiko, Tokyo (JP); ONISHI, Toshikazu, Tokyo (JP)
(74) Representative: WESER & Kollegen Patentanwälte PartmbB

(57) **Abstract**

Provided is a staining method by which a ligand protein having specificity for a target in a biological sample can be stably applied in an intended amount to an intended site through ejection by an inkjet system. The staining method includes ejecting, from a liquid ejection head of an inkjet system, a liquid composition containing a ligand protein having specificity for a target in a biological sample, and a surfactant represented by the following formula (1), to thereby apply the liquid composition to the biological sample.

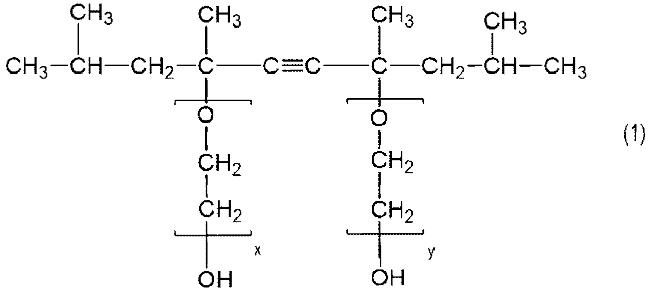

## Description

### BACKGROUND OF THE INVENTION

### Field of the Invention

The present invention relates to a staining method for staining a biological sample, a liquid composition for staining, and a kit for staining. Specifically, the present invention relates to a staining method including a step of ejecting, from a liquid ejection head of an inkjet system, a liquid composition containing a ligand protein having specificity for a target in a biological sample, and a surfactant represented by the formula (1), to thereby apply the liquid composition to the biological sample, a liquid composition to be used for such staining, and a kit to be used for such staining.

### Description of the Related Art

Development of molecular biology in recent years has increased the importance of analysis of substances present in living bodies. For example, many attempts have been made to elucidate proteins and chemical substances involved in recurrence and metastasis from cancer tissue sections.

Observation with a microscope is often used as an approach to analyzing a protein or a chemical substance in a biological sample, such as a cell or a tissue. In this case, as an approach to identifying a target, such as a protein or a chemical substance, in a biological sample, there has been used a method involving labeling the target via a protein (ligand protein) having specificity for the target, such as an antibody, followed by detection based on color development, luminescence, fluorescence, or the like.

The ligand protein to be used in this case is expensive. Accordingly, there is a demand that its usage amount be reduced as much as possible. In addition, there is also a demand that a liquid composition containing the ligand protein having specificity for the target be reliably placed only at a site where the target is expected to be present.

In Japanese Patent Application Laid-Open No. 2018-517895, there is a disclosure of a method of dispensing reagent droplets of between about 1 pL to about 50 pL onto a biological sample. In addition, in Japanese Patent Application Laid-Open No. 2018-517895, there is also a disclosure of a method of dispensing the reagent droplets by inkj et.

### SUMMARY OF THE INVENTION

The present invention is directed to provide a staining method by which a ligand protein having specificity for a target in a biological sample can be stably applied in an intended amount to an intended site through ejection by an inkjet system, a liquid composition for staining, and a kit for staining.

According to one aspect of the present invention, there is provided a staining method for staining a biological sample. Specifically, there is provided a staining method including ejecting, from a liquid ejection head of an inkjet system, a liquid composition containing: a ligand protein having specificity for a target in a biological sample; and a surfactant represented by the formula (1), to thereby apply the liquid composition to the biological sample.

In addition, according to another aspect of the present invention, there is provided a liquid composition for staining of a biological sample. Specifically, there is provided a liquid composition for staining of a biological sample using an inkjet system, the liquid composition including: a ligand protein having specificity for a target in the biological sample; and a surfactant represented by the formula (1). 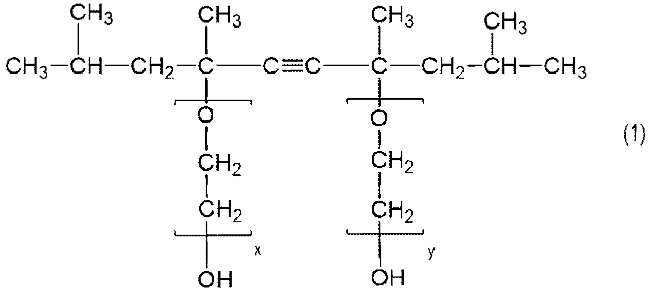 In the formula (1), "x" and "y" satisfy a relationship of 1.0≤x+y≤30.0.

Further, according to another aspect of the present invention, there is provided a kit for staining of a biological sample. Specifically, there is provided a kit for staining of a biological sample using an inkjet system, the kit including a liquid composition containing: a ligand protein having specificity for a target in the biological sample; and a surfactant represented by the formula (1).

Further features of the present invention will become apparent from the following description of exemplary embodiments.

### DESCRIPTION OF THE EMBODIMENTS

In Japanese Patent Application Laid-Open No. 2018-517895, droplets of an antibody reagent composition or the like are applied by inkj et to perform immunostaining. The inventors ejected the antibody reagent composition described in Japanese Patent Application Laid-Open No. 2018-517895 by an inkjet system. As a result, particularly when the ejection was performed at a high frequency, that is, when the ejection was performed at short ejection intervals of time, a position to which the antibody reagent composition was to be applied was shifted from an intended position in some cases.

The present invention is described in detail below by taking exemplary embodiments.

According to a first embodiment of the present invention, there is provided a staining method including ejecting, from a liquid ejection head of an inkjet system, a liquid composition containing: a ligand protein having specificity for a target in a biological sample; and a surfactant represented by the following formula (1), to thereby apply the liquid composition to the biological sample. 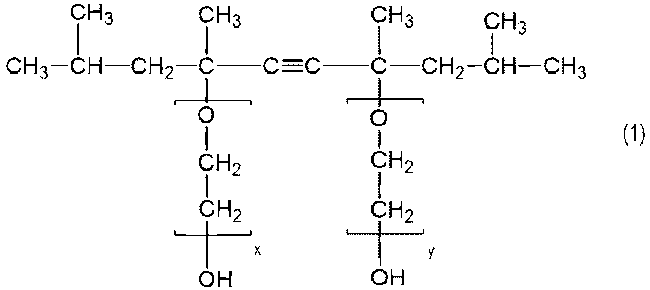 In the formula (1), "x" and "y" satisfy a relationship of 1.0≤x+y≤30.0.

Assuming the use of an expensive reagent at the time of staining, it is desired that the minimum required amount thereof can be applied to the intended position. In view of this, the inventors investigated ejection from the liquid ejection head of the inkjet system, which was expected to be capable of applying minute liquid droplets to the intended site.

However, for example, a primary stain in immunostaining was loaded into the liquid ejection head, and its ejection by the inkjet system was attempted, but the ejection was not successfully performed. It is known that liquid droplets to be ejected by the inkjet system pass through fine nozzles, and hence differ in ejection speed and ejection amount depending on the viscosity and surface tension thereof. The primary stain, the ejection of which by the inkjet system was attempted in this investigation, had no surfactant added thereto, and hence had a high surface tension. Accordingly, it was conceived that a liquid composition optimized for the ejection of the primary stain by the inkjet system was required for inkjet ejection.

In view of the foregoing, the inventors produced a liquid composition having its surface tension reduced by the addition of a surfactant, and attempted its ejection by the inkjet system. As a result, the ejection became able to be performed, but the ejection was not as clean as expected. In particular, the liquid composition was not able to be accurately ejected to the intended site. This phenomenon is hereinafter expressed as "irregular ejection".

The irregular ejection was investigated through detailed observation, and as a result, it was conceived that the irregular ejection occurred by such a cause as described below. A liquid composition that has overflown from an ejection port at the time of ejection returns to the inside of a flow path in such a manner as to be pulled by the liquid composition in the flow path. However, as ejection is repeated, some of the liquid composition does not fully return to the inside of the flow path in some cases. After that, the liquid composition on the periphery of the ejection port not returning to the flow path dries, and its protein or the like becomes a precipitate and solidifies. In particular, when the protein is brought into contact with a gas-liquid interface, the protein cannot maintain hydrogen bonding or ionic bonding required for maintaining its higher-order structure, thus being denatured, and hence is liable to precipitate. A portion where the precipitate is present is liable to wet as compared to a surface on the periphery of the ejection port. When the portion liable to wet is formed on the surface on the periphery of the ejection port, liquid droplets to be ejected next are pulled by the portion liable to wet, and hence the liquid droplets cannot be ejected straight. Conceivably as a result, the "irregular ejection", which is a failure to be ejected to the intended site, occurs.

The inventors attempted to suppress the irregular ejection through use of various surfactants. However, many of the surfactants were insufficient in suppressive effect on irregular ejection. In addition, when a large amount of the surfactant was added in order to obtain a higher suppressive effect on irregular ejection, the irregular ejection was alleviated, but in staining performed after the application of the liquid composition, sufficient staining was not obtained. It was conceived that the addition of a large amount of the surfactant influenced the staining through inhibition of binding between the ligand protein in the liquid composition and the target in the biological sample, the denaturation of the ligand protein, and the like.

The inventors have investigated a surfactant that suppresses the irregular ejection due to inkjet ejection in such an amount as not to influence the staining, and as a result, have found the surfactant represented by the formula (1).

The inventors conceive the reason why the surfactant of the formula (1) has a high suppressive effect on the occurrence of irregular ejection to be as described below.

The surfactant represented by the formula (1) has a small molecular weight as compared to many proteins. In addition, the surfactant represented by the formula (1) has a three-dimensional structure in its hydrophobic moiety, and hence hardly forms a micelle in the liquid composition. Accordingly, its orientation and adsorption to a gas-liquid interface formed in the vicinity of the ejection port are conceived to be faster than those of a protein. The surfactant of the formula (1) aligns at the gas-liquid interface to cause steric hindrance, and hence the protein becomes less liable to approach the gas-liquid interface. Accordingly, the denaturation of the protein at the gas-liquid interface is conceived to be suppressed.

### <Surfactant represented by Formula (1)>

The compound represented by the formula (1) is a substance that acts as a surfactant. 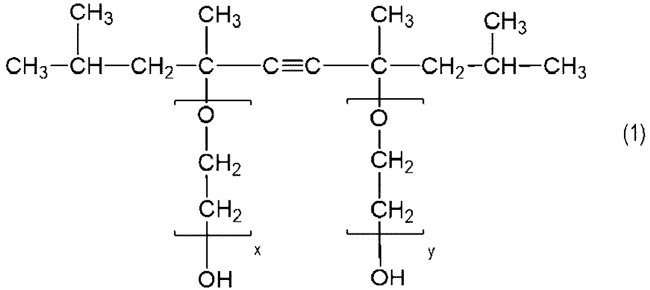 In the formula (1), "x" and "y" satisfy a relationship of 1.0≤x+y≤30.0.

The surfactant represented by the formula (1) has a feature in that, when a gas-liquid interface is formed, its orientation and adsorption to the interface are fast. Accordingly, even when dryness occurs on the periphery of the ejection port of the liquid ejection head, the protein is prevented from being brought into contact with the gas-liquid interface, to thereby suppress a precipitate serving as a cause of irregular ejection. Presumably thus, the irregular ejection can be suppressed. One kind of the surfactant represented by the formula (1) may be used alone, or a mixture of two or more kinds of compounds having different values of x+y may be used.

Even when the surfactant represented by the formula (1) is one kind of surfactant, "x" and "y" have a certain degree of distribution in some cases. In such cases, "x" and "y" of the surfactant may adopt an average value taking the abundance ratio of each value into consideration. Meanwhile, when a plurality of kinds of different surfactants are used, it is appropriate that the plurality of surfactants each satisfy the relationship of 1.0≤x+y≤30.0.

In the formula (1), the value of x+y is 1.0 or more and 30.0 or less, preferably 1.3 or more and 20.0 or less, more preferably 3.0 or more and 15.0 or less, even more preferably 4.0 or more and 10.0 or less.

When the value of x+y is less than 1.0, the water solubility of the surfactant is reduced. Accordingly, its solubility in the liquid composition is reduced, and hence the surfactant cannot be dissolved to achieve a content required for obtaining an ejection-improving effect in some cases. Meanwhile, when the value of x+y is more than 30.0, the molecular weight of the surfactant is increased, and hence the speed of orientation to the interface tends to be low. Accordingly, the suppressive effect on irregular ejection becomes insufficient in some cases.

A specific example of the surfactant represented by the formula (1) may be an acetylene glycol-based surfactant, and commercially available examples of the acetylene glycol-based surfactant may include ACETYLENOL E13T, E40, E60, E100, and E200 (which are manufactured by Kawaken Fine Chemicals Co., Ltd.), and Surfynol 465 and 485 (which are manufactured by Nissin Chemical Industry Co., Ltd.).

The content of the surfactant of the formula (1) in the liquid composition is preferably 0.1 mass% or more and 3 mass% or less with respect to the total mass of the liquid composition.

When the content of the surfactant is 0.1 mass% or more, the suppressive effect of the surfactant of the formula (1) on irregular ejection is easily obtained. Meanwhile, when the content of the surfactant is 3 mass% or less, a reduction in stainability due to the surfactant through, for example, inhibition of binding between the ligand protein in the liquid composition and the target in the biological sample is easily suppressed.

### <Biological Sample>

The biological sample in this embodiment is not particularly limited as long as the biological sample may contain the target for which the specificity of the ligand protein can function. Examples thereof may include: cultured cells; body fluids (e.g., blood, serum, plasma, spinal fluid, sweat, saliva, and urine), hair, excretions, organs, and tissues of animals; animals and plants themselves; samples obtained by fixation thereof, followed by paraffin embedding; and dried products thereof. In addition, the examples may also include river water, lake water, sea water, tap water and sewage water, and soil each of which contains a substance of biological origin and may contain the target for which the specificity of the ligand protein to be applied can function.

The biological sample may be immobilized on a solid phase. When the biological sample is immobilized on the solid phase, a step of removing an excess liquid composition through a washing step or the like can be conveniently performed after the application of the liquid composition.

Examples of the solid phase include, but not limited to, polystyrene resin particles, nylon resin particles, glass particles, a glass flat plate, a polystyrene microplate, latex particles, various magnetic particles, metal particles, metal-coated particles, a metal flat plate, a metal-coated flat plate, various porous materials, and various electrodes. Of those, a glass flat plate such as a slide glass is suitably used.

A product obtained by subjecting the solid phase to surface modification to strengthen the binding between the solid phase and the biological sample is suitably used in this embodiment. The binding between the solid phase and the biological sample is not particularly limited as long as the specificity of the ligand protein for the target in the biological sample is not inhibited. An example of the surface modification of the solid phase is addition of a functional group, such as an amino group, a carboxyl group, a thiol group, a disulfide group, or a hydroxy group, or addition of a compound having a particular amino acid sequence.

In addition, a solid phase suppressed from nonspecific adsorption by subjecting the solid phase to hydrophilic treatment is also suitably used in this embodiment.

### <Inkj et>

The method of applying the liquid composition in this embodiment includes the step of ejecting the liquid composition from a liquid ejection head of an inkjet system (sometimes referred to simply as "inkjet") to apply the liquid composition to the biological sample.

Examples of the liquid ejection head may include: a mode configured to eject the liquid composition by causing film boiling to occur in the liquid composition with an electro-thermal converter to form air bubbles; a mode configured to eject the liquid composition with an electro-mechanical converter; and a mode configured to eject the liquid composition through utilization of static electricity. Of those, a liquid ejection head utilizing an electro-thermal converter, that is, including a heat generating element configured to apply thermal energy to the liquid composition is preferred from the viewpoint of performing high-speed and high-density printing.

In an inkjet system configured to eject a liquid composition from a liquid ejection head through the action of thermal energy, when a liquid composition containing a protein is brought into contact with a heat generating element, the protein adheres to the heat generating element in some cases. When this phenomenon continues, the protein is deposited on the heat generating element. As a result, the action of the thermal energy becomes difficult to transmit to the liquid composition, causing an ejection failure or the like in some cases.

It is conceived that the surfactant represented by the formula (1) undergoes fast orientation and adsorption to an interface between the heat generating element and the liquid composition, and hence suppresses the adsorption of the protein. In addition, it is conceived that the orientation and adsorption of the surfactant represented by the formula (1) are fast with respect to a protein adhering to the heat generating element and having its hydrophobic surface exposed. It is conceived that, through this action, the surfactant represented by the formula (1) suppresses the deposition of the protein on the heat generating element, thus contributing to the stabilization of ejection.

### <Ligand Protein having Specificity for Target>

In this embodiment, the liquid composition contains the ligand protein having specificity for a target. Herein, a molecule having specificity for a target is referred to as "ligand", and a protein having specificity for a target is referred to as "ligand protein".

In addition, "having specificity for a target" refers to having a dissociation constant with the target of 1 µM or less. The ligand protein to be used for staining is not particularly limited as long as the ligand protein has a dissociation constant of 1 µM or less for the target, and examples thereof include an enzyme, an antibody, an antigen protein, a receptor, a cytokine, a hormone, and a serum protein.

The ligand protein may be a known one other than the foregoing, or may be a novel one. The ligand protein to be used for the staining of this embodiment is particularly preferably an antibody or an antibody fragment from the viewpoints of a low dissociation constant and structural stability of a molecule. In stand point of stable ejection by an inkjet system, a content of the ligand protein in the liquid composition is preferably 0.001 mass% or more and 3 mass% or less with respect to a total mass of the liquid composition.

### <Antibody and Antibody Fragment>

The "antibody" is a collective term for an immunoglobulin family induced by an immune system in response to a particular antigen or substance, and is a substance capable of recognizing a particular target and binding to the target. The antibody may be obtained from any of various animal species, such as a mouse, a rabbit, a goat, a camel, and a human. In addition, a humanized antibody, a chimeric antibody, or the like may also be used. In addition, the antibody may be any of a monoclonal antibody and polyclonal antibodies.

The "antibody fragment" refers to part of an antibody, the part being capable of specifically binding to a target molecule. Examples of the antibody fragment include a Fab fragment, a Fab' fragment, F(ab')2, a heavy chain variable (VH) region alone, a light chain variable (VL) region alone, a complex of VH and VL, or a camelized VH domain, or a peptide containing a complementarity-determining region (CDR) of an antibody, and a single-chain antibody (scfv) obtained by linking a heavy chain variable region and a light chain variable region.

### <Labeling Substance>

The ligand protein is preferably modified with a labeling substance. When the ligand protein is modified with the labeling substance, the presence position of the target in the biological sample can be recognized after staining. Herein, the term "modified" refers to physical adsorption of the ligand protein and the labeling substance, chemical bonding thereof, or both physical adsorption and chemical bonding thereof.

The modification of the ligand protein with the labeling substance may be performed by a method such as a physical adsorption method, a chemical bonding method, or combined use thereof.

An example of the physical adsorption method is a method involving mixing the ligand protein and the labeling substance in a solution such as a buffer solution to bring the ligand protein and the labeling substance into contact with each other. For example, when the labeling substance is colloidal gold or latex, the physical adsorption method is effective, and the ligand protein and the colloidal gold may be mixed in a buffer solution to be brought into contact with each other, to thereby provide a colloidal gold-labeled ligand protein.

An example of the chemical bonding method is a method involving causing the ligand protein and the labeling substance to be mixed and brought into contact with a bifunctional crosslinking reagent, such as glutaraldehyde, a carbodiimide, an imide ester, or maleimide, to thereby allow the crosslinking reagent to react with an amino group, a carboxyl group, a thiol group, an aldehyde group, a hydroxy group, or the like of each of both of the antibody and the labeling substance. In addition, there is also given a method involving producing a derivative obtained by bonding a carbodiimide to the labeling substance, and allowing the derivative to react with an amino group of the ligand protein. For example, when the labeling substance is a fluorescent substance, an enzyme, or a chemiluminescent substance, the chemical bonding method is effective.

Examples of the labeling substance include a low-molecular-weight compound, fine particles, an enzyme, a fluorescent dye, and a fluorescent protein.

Specific examples of the low-molecular-weight compound include biotin, digoxigenin, and dinitrophenyl.

Specific examples of the fine particles include colloidal gold, ferrite particles, latex beads, ferrite-encapsulated latex beads, fluorescent substance-encapsulated latex beads, and agarose beads.

Specific examples of the enzyme include horseradish peroxidase, alkaline phosphatase, β-galactosidase, and luciferase.

Specific examples of the fluorescent dye include Cy3, Cy5, Texas Red, fluorescein, Indocyanine Green, and an Alexa dye (e.g., Alexa 568). In addition, a rare earth fluorescent complex such as a europium complex may be used.

Specific examples of the fluorescent protein include a green fluorescent protein (GFP) and derivatives thereof, R-phycoerythrin, and allophycocyanin.

Of those, at least one selected from the group consisting of: biotin; an enzyme; a fluorescent dye; and a fluorescent protein is preferred as the labeling substance. That is, the ligand protein is preferably modified with at least one labeling substance selected from the group consisting of: biotin; an enzyme; a fluorescent dye; and a fluorescent protein.

In addition, a plurality of the materials given above may be used as the labeling substance. In addition, a material other than those given above may be used.

### <Blocking Agent>

A so-called blocking agent may be used in order to suppress nonspecific adsorption of the ligand protein onto a portion other than the target at the time of the staining of the biological sample with the ligand protein. When the blocking agent is used with the ligand protein in the liquid composition, a satisfactory staining result can be obtained.

Examples of the blocking agent include bovine serum albumin, casein, an animal serum, gelatin, fat-free milk, polyvinyl alcohol, polyvinylpyrrolidone, polyethylene glycol, a phospholipid, and compounds containing the above-mentioned compounds. Of those, at least one selected from the group consisting of: bovine serum albumin; and casein is preferred as the blocking agent. In addition, a commercially available blocking agent may also be used. In particular, the content of the blocking agent in the liquid composition is preferably 0.1 mass% or more and 10 mass% or less with respect to the total mass of the liquid composition.

When a protein is used as the blocking agent, the total content of proteins including the ligand protein in the liquid composition is preferably set to 0.001 mass% or more and 3 mass% or less with respect to the total mass of the liquid composition in consideration of ejection by the inkjet system.

### <Water-soluble Organic Solvent>

The intervals of ejection of the liquid composition are lengthened in some cases such as a case in which, after the liquid composition has been applied to the biological sample by the inkjet system, the resultant is left to stand for a while, and then the liquid composition is further applied. The term "intermittent ejection stability" refers to the following characteristic: irrespective of how long or short the intervals between ejection and ejection are, the ejection of the liquid composition from the ejection head does not become unstable, or non-ejection does not occur.

As a result of an investigation made by the inventors, it has been found that intermittent ejection stability is obtained by adding a water-soluble organic solvent to the liquid composition. The reason for this is conceived to be as described below.

When the ejection head of the inkjet system is left to stand for a while after the ejection of the liquid composition, water in the liquid composition evaporates from the ejection port. The water evaporation increases the concentration of a protein near a liquid surface to increase the viscosity of the liquid composition. Accordingly, it is conceived that there is established a state in which, when energy is applied at the time of the next ejection, resistance is generated in the vicinity of the ejection port, making the ejection difficult.

To solve this problem, the inventors have arrived at adding the water-soluble organic solvent to the liquid composition. Also when the water-soluble organic solvent is incorporated into the liquid composition, the water evaporation in the vicinity of the ejection port occurs. Meanwhile, at the time of an increase in temperature, the concentration of the protein in the liquid composition increases, and at the same time, the concentration of a water-soluble organic solvent having a higher boiling point than water also increases. At this time, the protein, because of having high water solubility, moves to a deeper part of the flow path where the concentration of the water-soluble organic solvent is relatively low. Accordingly, the increase in viscosity of the liquid composition caused by the increase in concentration of the protein in the vicinity of the ejection port is conceived to be alleviated. Meanwhile, the water-soluble organic solvent has a lower molecular weight than the protein, and hence the increase in viscosity of the liquid composition at the time of the increase in concentration of the water-soluble organic solvent is milder than that caused by the increase in concentration of the protein. Accordingly, the resistance at the time of the application of energy for ejection is conceived to become milder than when the water-soluble organic solvent is not added. In addition, it is conceived that, when the concentration of the water-soluble organic solvent in the vicinity of the ejection port is increased, the evaporation rate of water is slowed down, and hence changes in concentrations of the components of the liquid composition in the flow path can be suppressed.

Conceivably as a result of the foregoing, the intermittent ejection stability is enhanced by adding the water-soluble organic solvent.

In this embodiment, the "water-soluble organic solvent" means an "organic solvent having a solubility in water at 20°C of 200 g/L or more." One kind, or two or more kinds of water-soluble organic solvents may be used as required.

Examples of the water-soluble organic solvent may include alcohols, polyalkylene glycols, glycol ethers, nitrogen-containing compounds, and sulfur-containing compounds.

Specific examples thereof include glycerin (290°C), dimethyl sulfoxide (DMSO) (189°C), ethylene glycol (197°C), diethylene glycol (245°C), polyethylene glycol having an average molecular weight of 600 (200°C or more), propylene glycol (187°C), triethylene glycol (244°C), 1,2-pentanediol (187°C), 1,2-hexanediol (223°C), ethylene glycol monobutyl ether (171°C), diethylene glycol monobutyl ether (180°C), 2-pyrrolidone (245°C), triethanolamine (208°C), and thiodiglycol (282°C). A boiling point is shown in the parentheses.

In this embodiment, it is preferred to use, as the water-soluble organic solvent, a water-soluble organic solvent having a boiling point of 180°C or more. The incorporation of the organic solvent having a boiling point of 180°C or more can effectively suppress the evaporation of a liquid component from the ejection port.

Two or more kinds selected from those solvents may be used as a mixture.

In this embodiment, it is preferred to use, as the water-soluble organic solvent, at least one selected from the group consisting of: glycerin; dimethyl sulfoxide; and polyethylene glycol. The use of any such water-soluble organic solvent can reduce the inactivation of the ligand protein.

The content of the water-soluble organic solvent in the liquid composition is preferably 0.1 mass% or more and 30.0 mass% or less with respect to the total mass of the liquid composition.

When the content of the water-soluble organic solvent is 0.1 mass% or more, a sufficient effect on the intermittent ejection stability is obtained. In addition, when the content is 30.0 mass% or less, the water-soluble organic solvent suppresses an increase in hydrophobicity of the solvent of the liquid composition to facilitate an improvement in stability of the ligand protein.

### <Second Liquid Composition>

The staining method in this embodiment may further include a step of applying a second liquid composition to the biological sample having the first liquid composition applied thereto.

The second liquid composition contains a protein (second protein) having specificity for the ligand protein (first protein) contained in the liquid composition described above (first liquid composition). "Having specificity for the ligand protein" refers to having a dissociation constant with the ligand protein of 1 µM or less. For example, when the ligand protein contained in the first liquid composition is a rabbit-derived antibody, a goat-derived anti-rabbit antibody may be used as the ligand protein contained in the second liquid composition. In addition, for example, when the ligand protein contained in the first liquid composition is a biotin-labeled rabbit-derived antibody, avidin and streptavidin as well as the goat-derived anti-rabbit antibody may each be used as the ligand protein of the second liquid composition.

The second protein is preferably modified with the above-mentioned labeling substance. This is because the use of the second protein modified with the labeling substance obviates the need to modify the first protein with the labeling substance, allowing the use of such a first protein that its modification with the labeling substance reduces its specificity for the target. The second protein is preferably modified with at least one selected from the group consisting of: biotin; an enzyme; a fluorescent dye; and a fluorescent protein.

The inkjet method serving as the method of applying the first liquid composition may be used as a method of applying the second liquid composition, that is, a method of ejecting the second liquid from a liquid ejection head of an inkjet system can be used. In addition, a method involving application by contact through use of a gravure roll or a blade, or a method involving non-contact application by dropping with a spray or a pipette may be used.

From the viewpoint of preventing damage to the biological sample, a method involving application by a non-contact method is preferred.

### <Substrate>

When an enzyme, such as horseradish peroxidase or alkaline phosphatase, is used as the labeling substance, color development may be performed using a chromogenic substrate that reacts with the enzyme.

A combination of an enzyme and a chromogenic/luminescent substrate for the enzyme may also be used. Examples of the enzyme include luciferase, horseradish peroxidase, and alkaline phosphatase. Color development may be performed by combining the following color developers as substrates therefor. Examples thereof include luciferin, 3,3'-diaminobenzidine (DAB), 5-bromo-4-chloro-3-indolyl phosphate (BCIP), 3,3'-(3,3'-dimethoxy-4,4'-biphenylene)bis[2-(4-nitrophenyl)-5-phenyl-2H-tetrazolium chloride] (NBT).

Accordingly, when the ligand protein is modified with an enzyme, the staining method according to this embodiment preferably further includes a step of applying a substrate for the enzyme to the biological sample having applied thereto the liquid composition containing the ligand protein. In addition, in a case in which: the staining method according to this embodiment includes the step of applying the first liquid composition to the biological sample and the step of applying the second liquid composition; the first protein (ligand protein) contained in the first liquid composition is not modified with any enzyme; and the second protein is modified with an enzyme, it is preferred that the method further include a step of applying a substrate for the enzyme to the biological sample having the first liquid composition and the second liquid composition applied thereto. In addition, the substrate for the enzyme may be contained in a third liquid composition.

### <Buffer Solution>

A buffer solution may be used as the solvent of the liquid composition. Examples thereof include, but not limited to, various buffer solutions, such as a phosphate buffer solution, a glycine buffer solution, a Good's buffer solution, a Tris buffer solution, and an ammonia buffer solution. The use of the buffer solution suppresses a change in pH to improve the storage stability of the ligand protein.

In addition, the liquid composition may contain a salt. Examples thereof include, but not limited to, a sodium salt such as sodium chloride, a potassium salt such as potassium chloride, and a magnesium salt such as magnesium chloride. Nonspecific adsorption other than the binding between the target and the ligand protein having specificity for the target can be suppressed by adjusting the concentration of the salt. In addition, the liquid composition preferably contains water in order to adjust the concentrations of the ligand protein and the surfactant represented by the formula (1) in the liquid composition.

### <Washing Step>

The method preferably includes a washing step of separating the biological sample and an unreacted ligand protein from the sample after the application of the ligand protein having specificity for the target to the biological sample. When the washing step is performed, color development or the like due to the ligand protein remaining at a site other than the target can be suppressed, and hence the position of the target can be made clear in observation after staining.

### <Other Components>

The liquid composition may contain, in addition to the above-mentioned components, various additives, such as an antifoaming agent, a surfactant, a pH adjuster, a viscosity modifier, a corrosion inhibitor, a preservative, an antifungal agent, an antioxidant, a reduction inhibitor, and a chelating agent, as required.

In addition, the liquid composition may contain, in addition to the above-mentioned components, a water-soluble organic compound that is a solid at 25°C, such as urea and derivatives thereof, polyethylene glycol having an average molecular weight of 1,000 or more, trimethylolpropane, and trimethylolethane.

In addition, according to a second embodiment of the present invention, there is provided a liquid composition for staining of a biological sample using an inkjet system, the liquid composition including: a ligand protein having specificity for a target in the biological sample; and a surfactant represented by the formula (1).

In addition, according to a third embodiment of the present invention, there is provided a kit for staining of a biological sample using an inkjet system, the kit including a liquid composition containing: a ligand protein having specificity for a target in the biological sample; and a surfactant represented by the formula (1).

In the kit, the components of the liquid composition containing the ligand protein having specificity for the target and the surfactant represented by the formula (1) may be mixed with, or separate from, each other, and may come in a container alone or as a mixture. In addition, the kit may further include a diluent, a blocking agent, a positive control, a negative control, an instruction manual, and the like. Examples of the positive control include a tissue section and a liquid sample each of which evidently contains a measurable target. In addition, the kit may further include a cartridge container configured to be mountable onto an ejection head of the inkjet system.

According to one aspect of the present invention, the staining method by which a ligand protein having specificity for a target in a biological sample can be stably applied in an intended amount to an intended site through ejection by an inkjet system, the liquid composition for staining, and the kit for staining can be provided.

### [Examples]

The embodiments of the present invention are described in more detail below by way of Examples and Comparative Examples. The present invention is by no means limited to the following Examples, and various modifications may be made without departing from the gist of the present invention. In the description of the following Examples, "part(s)" is by mass unless otherwise specified.

### <Biological Sample>

HER2-IHC Posicon Slide (PS-17001, Pathology Institute Corp.) was used as a biological sample.

### <Preparation of Buffer Solution>

An aqueous solution of 50 mM Tris base and an aqueous solution of 150 mM sodium chloride were incorporated, and the whole was adjusted to a pH of 7.6 with hydrochloric acid, followed by pressure filtration through a sterilizing filter having a pore size of 0.22 µm to prepare a buffer solution. This buffer solution is hereinafter referred to as "TBS buffer". Various ligand proteins, various surfactants, and a solid solvent were dissolved in this buffer solution in advance before preparation.

### <Ligand Proteins>

Polyclonal rabbit-derived anti-human HER2 antibodies (A0485, manufactured by Dako) were used as a ligand protein 1. "Her2" refers to human epidermal growth factor receptor-2 (human epidermal growth factor-2).

A monoclonal rabbit-derived anti-human HER2 antibody (4290, manufactured by Cell Signaling Technology, Inc.) was used as a ligand protein 2.

A product obtained by subjecting F(ab')2, which had been obtained by digesting polyclonal rabbit-derived anti-human HER2 antibodies (A0485, manufactured by Dako) with pepsin, to FITC labeling was used as a ligand protein 3. The F(ab')2 was produced in accordance with the following protocol.

First, the antibodies were dialyzed against a 0.1 M sodium acetate buffer solution (pH 3.75). After that, porcine gastric mucosa-derived pepsin-immobilized agarose (product of Sigma-Aldrich) was added, and the mixture was subjected to a reaction at 37°C for 3 hours. After that, a 0.5 M Tris buffer solution (pH 8.0) was added to a pH of 7.0 to stop the reaction. The pepsin-immobilized agarose was removed by a centrifugal separation method. Further, the solution was passed through a protein A-immobilized agarose column (Thermo Fisher Scientific Inc.). The resultant was dialyzed against the TBS buffer at room temperature for 2 hours to provide a F(ab')2 solution. Further, Fluorescein Labeling Kit-NH₂ (product name, Dojindo Laboratories) was used in accordance with the manufacturer's protocol to prepare FITC-labeled F(ab')2.

A ligand protein obtained by labeling polyclonal rabbit-derived anti-human HER2 antibodies (A0485, manufactured by Dako) with biotin was used as a ligand protein 4. The biotin labeling was performed using Biotin Labeling Kit-NH₂ (product name, Dojindo Laboratories) in accordance with the manufacturer's protocol to prepare biotin-labeled polyclonal rabbit-derived anti-human HER2 antibodies.

A ligand protein obtained by labeling polyclonal rabbit-derived anti-human HER2 antibodies (A0485, manufactured by Dako) with horseradish peroxidase was used as a ligand protein 5. The enzyme labeling was performed using Peroxidase Labeling Kit-NH₂ (product name, Dojindo Laboratories) in accordance with the manufacturer's protocol to prepare horseradish peroxidase-labeled polyclonal rabbit-derived anti-human HER2 antibodies.

A ligand protein obtained by labeling polyclonal rabbit-derived anti-human HER2 antibodies (A0485, manufactured by Dako) with alkaline phosphatase was used as a ligand protein 6. The enzyme labeling was performed using Alkaline Phosphatase Labeling Kit-NH₂ (product name, Dojindo Laboratories) in accordance with the manufacturer's protocol to prepare alkaline phosphatase-labeled polyclonal rabbit-derived anti-human HER2 antibodies.

Fluorescein Labeling Kit-NH₂ (product name, Dojindo Laboratories) was used for polyclonal rabbit-derived anti-human HER2 antibodies (A0485, manufactured by Dako) in accordance with the manufacturer's protocol to prepare FITC-labeled polyclonal rabbit-derived anti-human HER2 antibodies as a ligand protein 7.

R-Phycoerythrin Labeling Kit-NH₂ (product name, Dojindo Laboratories) was used for polyclonal rabbit-derived anti-human HER2 antibodies (A0485, manufactured by Dako) in accordance with the manufacturer's protocol to prepare R-phycoerythrin-labeled polyclonal rabbit-derived anti-human HER2 antibodies as a ligand protein 8.

Dual Link System-HRP (HRP-labeled polymer reagent) (K4063, Dako) was prepared and used as it was as a ligand protein 9.

FITC-labeled streptavidin (Funakoshi Co., Ltd.) was prepared as a ligand protein 10.

Biotin-labeled goat-derived anti-rabbit IgG (Funakoshi Co., Ltd.) was prepared as a ligand protein 11.

HRP-labeled goat-derived anti-rabbit IgG (Funakoshi Co., Ltd.) was prepared as a ligand protein 12.

FITC-labeled goat-derived anti-rabbit IgG (Funakoshi Co., Ltd.) was prepared as a ligand protein 13.

R-Phycoerythrin-labeled goat-derived anti-rabbit IgG (Funakoshi Co., Ltd.) was prepared as a ligand protein 14.

### <Surfactants>

ACETYLENOL E100 (manufactured by Kawaken Fine Chemicals Co., Ltd.) was prepared as a surfactant 1. This compound is represented by the formula (1) where x+y=10.

ACETYLENOL E40 (manufactured by Kawaken Fine Chemicals Co., Ltd.) was prepared as a surfactant 2. This compound is represented by the formula (1) where x+y=4.

ACETYLENOL E13T (manufactured by Kawaken Fine Chemicals Co., Ltd.) was prepared as a surfactant 3. This compound is represented by the formula (1) where x+y=1.3.

ACETYLENOL E200 (manufactured by Kawaken Fine Chemicals Co., Ltd.) was prepared as a surfactant 4. This compound is represented by the formula (1) where x+y=20.

2,4,7,9-Tetramethyl-5-decyne-4,7-diol (manufactured by Tokyo Chemical Industry Co., Ltd.) was prepared as a surfactant 5. This compound is represented by the formula (1) where x+y=0.

BIO-SOFT N91-8 (Stepan Company) was prepared as a surfactant 6.

Brij 30 (Merck) was prepared as a surfactant 7.

Triton X-100 (Merck) was prepared as a surfactant 8.

Tween 20 (Tokyo Chemical Industry Co., Ltd.) was prepared as a surfactant 9.

Sodium dodecyl sulfate (SDS/FUJIFILM Wako Pure Chemical Corporation) was prepared as a surfactant 10.

Cetyltrimethylammonium bromide (CTAB, Tokyo Chemical Industry Co., Ltd.) was prepared as a surfactant 11.

3-[3-(Cholamidopropyl)dimethylammonio]propanesulfonate (CHAPS, Dojindo Laboratories) was prepared as a surfactant 12.

None of the surfactants 6 to 12 is the surfactant represented by the formula (1).

### <Water-soluble Organic Solvent>

Glycerin, dimethyl sulfoxide (DMSO), polyethylene glycol 600, 2-pyrrolidone, diethylene glycol monobutyl ether, and ethylene glycol monobutyl ether (each of which is manufactured by Kishida Chemical Co., Ltd.) were each used as the water-soluble organic solvent. In addition, 1,2-hexanediol and 1,2-propanediol (each of which is manufactured by Tokyo Chemical Industry Co., Ltd.) were each used.

### <Proteins other than Ligand Proteins (Blocking Agent)>

Bovine serum albumin (Sigma-Aldrich) was prepared as a blocking protein 1.

Casein (Sigma-Aldrich) was prepared as a blocking protein 2.

Normal goat serum (FUJIFILM Wako Pure Chemical Corporation) was prepared as a blocking protein 3.

### <Other Substance>

Polyethylene glycol 1000 (Kishida Chemical Co., Ltd.) was prepared as a solid solvent 1 serving as a solid water-soluble organic compound.

### <Preparation of First Liquid Composition>

Respective components were mixed so as to achieve contents shown in Table 1-1, Table 1-2, and Table 1-3 to prepare first liquid compositions. Numbers in the tables represent solid matter contents (mass%). The ligand proteins 1 to 8, the blocking proteins 1 to 3, the surfactants 1 to 12, and the solid solvent 1 were diluted with the TBS buffer in advance before the preparation of the first liquid compositions.

**Table 1-1**

| First liquid composition No. | | 1 | 2 | 3 | 4 | 5 | 6 | 7 | 8 | 9 | 10 | 11 | 12 | 13 |
|---|---|---|---|---|---|---|---|---|---|---|---|---|---|---|
| Ligand protein | Ligand protein 1 | 0.001 | | | | | | | | 0.001 | 0.001 | 0.001 | 0.001 | 0.001 |
| | Ligand protein 2 | | 0.001 | | | | | | | | | | | |
| | Ligand protein 3 | | | 0.001 | | | | | | | | | | |
| | Ligand protein 4 | | | | 0.001 | | | | | | | | | |
| | Ligand protein 5 | | | | | 0.001 | | | | | | | | |
| | Ligand protein 6 | | | | | | 0.001 | | | | | | | |
| | Ligand protein 7 | | | | | | | 0.001 | | | | | | |
| | Ligand protein 8 | | | | | | | | 0.001 | | | | | |
| Surfacta nt | Surfactant 1 | 0.5 | 0.5 | 0.5 | 0.5 | 0.5 | 0.5 | 0.5 | 0.5 | | | | 0.05 | 0.10 |
| | Surfactant 2 | | | | | | | | | 0.5 | | | | |
| | Surfactant 3 | | | | | | | | | | 0.5 | | | |
| | Surfactant 4 | | | | | | | | | | | 0.5 | | |
| | Surfactant 5 | | | | | | | | | | | | | |
| | Surfactant 6 | | | | | | | | | | | | | |
| | Surfactant 7 | | | | | | | | | | | | | |
| | Surfactant 8 | | | | | | | | | | | | | |
| | Surfactant 9 | | | | | | | | | | | | | |
| | Surfactant 10 | | | | | | | | | | | | | |
| | Surfactant 11 | | | | | | | | | | | | | |
| | Surfactant 12 | | | | | | | | | | | | | |
| Water-soluble organic solvent | Glycerin | 10.0 | 10.0 | 10.0 | 10.0 | 10.0 | 10.0 | 10.0 | 10.0 | 10.0 | 10.0 | 10.0 | 10.0 | 10.0 |
| | Dimethyl sulfoxide (DMSO) | | | | | | | | | | | | | |
| | Polyethylene glycol 600 | | | | | | | | | | | | | |
| | 1,2-Hexanediol | | | | | | | | | | | | | |
| | 2-Pyrrolidone | | | | | | | | | | | | | |
| | 1,2-Propanediol | | | | | | | | | | | | | |
| | Diethylene glycol monobutyl ether | | | | | | | | | | | | | |
| | Ethylene glycol monobutyl ether | | | | | | | | | | | | | |
| Protein other than ligand protein | Blocking protein 1 | 0.30 | 0.30 | 0.30 | 0.30 | 0.30 | 0.30 | 0.30 | 0.30 | 0.30 | 0.30 | 0.30 | 0.30 | 0.30 |
| | Blocking protein 2 | | | | | | | | | | | | | |
| | Blocking protein 3 | | | | | | | | | | | | | |
| Solid water-soluble organic compou nd | Polyethylene glycol 1000 | | | | | | | | | | | | | |
| | TBS buffer | Balan ce | Balan ce | Balan ce | Balan ce | Balan ce | Balan ce | Balan ce | Balan ce | Balan ce | Balan ce | Balan ce | Balan ce | Balan ce |

**Table 1-2**

| First liquid composition No. | | 14 | 15 | 16 | 17 | 18 | 19 | 20 | 21 | 22 | 23 | 24 | 25 | 26 |
|---|---|---|---|---|---|---|---|---|---|---|---|---|---|---|
| Ligand protein | Ligand protein 1 | 0.001 | 0.001 | 0.001 | 0.001 | 0.001 | 0.001 | 0.001 | 0.001 | 0.001 | 0.001 | 0.001 | 0.001 | 0.001 |
| | Ligand protein 2 | | | | | | | | | | | | | |
| | Ligand protein 3 | | | | | | | | | | | | | |
| | Ligand protein 4 | | | | | | | | | | | | | |
| | Ligand protein 5 | | | | | | | | | | | | | |
| | Ligand protein 6 | | | | | | | | | | | | | |
| | Ligand protein 7 | | | | | | | | | | | | | |
| | Ligand protein 8 | | | | | | | | | | | | | |
| Surfacta nt | Surfactant 1 | 3.0 | 3.5 | 0.5 | 0.5 | 0.5 | 0.5 | 0.5 | 0.5 | 0.5 | 0.5 | 0.5 | 0.5 | 0.5 |
| | Surfactant 2 | | | | | | | | | | | | | |
| | Surfactant 3 | | | | | | | | | | | | | |
| | Surfactant 4 | | | | | | | | | | | | | |
| | Surfactant 5 | | | | | | | | | | | | | |
| | Surfactant 6 | | | | | | | | | | | | | |
| | Surfactant 7 | | | | | | | | | | | | | |
| | Surfactant 8 | | | | | | | | | | | | | |
| | Surfactant 9 | | | | | | | | | | | | | |
| | Surfactant 10 | | | | | | | | | | | | | |
| | Surfactant 11 | | | | | | | | | | | | | |
| | Surfactant 12 | | | | | | | | | | | | | |
| Water-soluble organic solvent | Glycerin | 10.0 | 10.0 | 0.0 | | | 9.0 | 9.0 | | | | 7.0 | 10.0 | 10.0 |
| | Dimethyl sulfoxide (DMSO) | | | | 10.0 | | | | | | | | | |
| | Polyethyl ene glycol 600 | | | | | 10.0 | | | | | | | | |
| | 1,2-Hexanedi ol | | | | | | 1.0 | | | | | | | |
| | 2-Pyrrolido ne | | | | | | | 1.0 | | | | | | |
| | 1,2-Propanedi ol | | | | | | | | 10.0 | | | | | |
| | Diethylen e glycol monobuty 1 ether | | | | | | | | | 10.0 | | | | |
| | Ethylene glycol monobuty 1 ether | | | | | | | | | | 10.0 | | | |
| Protein other than ligand protein | Blocking protein 1 | 0.30 | 0.30 | 0.30 | 0.30 | 0.30 | 0.30 | 0.30 | 0.30 | 0.30 | 0.30 | 0.30 | 3.1 | 2.9 |
| | Blocking protein 2 | | | | | | | | | | | | | |
| | Blocking protein 3 | | | | | | | | | | | | | |
| Solid water-soluble organic compou nd | Polyethyl ene glycol 1000 | | | | | | | | | | | 3.0 | | |
| | TBS buffer | Balan ce | Balan ce | Balan ce | Balan ce | Balan ce | Balan ce | Balan ce | Balan ce | Balan ce | Balan ce | Balan ce | Balan ce | Balan ce |

**Table 1-3**

| First liquid composition No. | | 27 | 28 | 29 | 30 | 31 | 32 | 33 | 34 | 35 | 36 | 37 | 38 | 39 |
|---|---|---|---|---|---|---|---|---|---|---|---|---|---|---|
| Ligand protein | Ligand protein 1 | 0.001 | 0.001 | 0.001 | 0.001 | 0.001 | 0.001 | 0.001 | 0.001 | 0.001 | 0.001 | 0.001 | 0.001 | 0.001 |
| | Ligand protein 2 | | | | | | | | | | | | | |
| | Ligand protein 3 | | | | | | | | | | | | | |
| | Ligand protein 4 | | | | | | | | | | | | | |
| | Ligand protein 5 | | | | | | | | | | | | | |
| | Ligand protein 6 | | | | | | | | | | | | | |
| | Ligand protein 7 | | | | | | | | | | | | | |
| | Ligand protein 8 | | | | | | | | | | | | | |
| Surfacta nt | Surfactant 1 | 0.5 | 0.5 | 0.5 | 0.5 | 0 | | | | | | | | |
| | Surfactant 2 | | | | | | | | | | | | | |
| | Surfactant 3 | | | | | | | | | | | | | |
| | Surfactant 4 | | | | | | | | | | | | | |
| | Surfactant 5 | | | | | | 0.5 | | | | | | | |
| | Surfactant 6 | | | | | | | 0.5 | | | | | | |
| | Surfactant 7 | | | | | | | | 0.5 | | | | | |
| | Surfactant 8 | | | | | | | | | 0.5 | | | | |
| | Surfactant 9 | | | | | | | | | | 0.5 | | | |
| | Surfactant 10 | | | | | | | | | | | 0.5 | | |
| | Surfactant 11 | | | | | | | | | | | | 0.5 | |
| | Surfactant 12 | | | | | | | | | | | | | 0.5 |
| Water-soluble organic solvent | Glycerin | 10.0 | 10.0 | 10.0 | 10.0 | 10.0 | 10.0 | 10.0 | 10.0 | 10.0 | 10.0 | 10.0 | 10.0 | 10.0 |
| | Dimethyl sulfoxide (DMSO) | | | | | | | | | | | | | |
| | Polyethyl ene glycol 600 | | | | | | | | | | | | | |
| | 1,2-Hexanedi ol | | | | | | | | | | | | | |
| | 2-Pyrrolido ne | | | | | | | | | | | | | |
| | 1,2-Propanedi ol | | | | | | | | | | | | | |
| | Diethylen e glycol monobuty l ether | | | | | | | | | | | | | |
| | Ethylene glycol monobuty l ether | | | | | | | | | | | | | |
| Protein other than ligand protein | Blocking protein 1 | 0.030 | 0.000 | | | 0.3 | 0.3 | 0.3 | 0.3 | 0.3 | 0.3 | 0.3 | 0.3 | 0.3 |
| | Blocking protein 2 | | | 0.3 | | | | | | | | | | |
| | Blocking protein 3 | | | | 0.3 | | | | | | | | | |
| Solid water-soluble organic compou nd | Polyethyl ene glycol 1000 | | | | | | | | | | | | | |
| | TBS buffer | Balan ce | Balan ce | Balan ce | Balan ce | Balan ce | Balan ce | Balan ce | Balan ce | Balan ce | Balan ce | Balan ce | Balan ce | Balan ce |

### <Preparation of Second Liquid Composition>

Respective components were mixed so as to achieve contents shown in Table 2 to prepare second liquid compositions. Numbers in the table represent solid matter contents. A product supplied by a manufacturer was used as it was as a second liquid composition 1, and hence a description to that effect is given in Table 2.

The ligand proteins 10 to 14, the blocking protein 1, and the surfactant 1 were diluted with the TBS buffer in advance before the preparation of the second liquid compositions.

**Table 2**

| Second liquid composition No. | | 1 | 2 | 3 | 4 | 5 | 6 |
|---|---|---|---|---|---|---|---|
| Ligand protein | Ligand protein 9 | Product supplied by manufacturer was used as it was | | | | | |
| | Ligand protein 10 | | 0.001 | | | | |
| | Ligand protein 11 | | | 0.001 | | | |
| | Ligand protein 12 | | | | 0.001 | | |
| | Ligand protein 13 | | | | | 0.001 | |
| | Ligand protein 14 | | | | | | 0.001 |
| Surfactant | Surfactant 1 | | 0.5 | 0.5 | 0.5 | 0.5 | 0.5 |
| Water-soluble organic solvent | Glycerin | | 10.0 | 10.0 | 10.0 | 10.0 | 10.0 |
| Protein other than ligand protein | Blocking protein 1 | | 0.30 | 0.30 | 0.30 | 0.30 | 0.30 |
| | TBS buffer | - | Balance | Balance | Balance | Balance | Balance |

### <Preparation of Third Liquid Composition>

Further, Liquid DAB+ (K3465, Dako) was prepared as a third liquid composition 1, and prepared and used in accordance with the manufacturer's protocol.

BCIP-NBT Solution Kit (Nacalai Tesque, Inc.) was prepared as a third liquid composition 2, and prepared and used in accordance with the manufacturer's protocol.

The same liquid composition as that prepared as the second liquid composition 2 was used as a third liquid composition 3.

### <Evaluation of Ejection Property>

In evaluation criteria for each evaluation item described below, "A" and "B" were defined as acceptable levels, and "C" was defined as an unacceptable level.

In each of Examples 1-1 to 1-35 and Comparative Examples 1-1 to 1-9, the first liquid composition or the second liquid composition shown in Table 3-1, Table 3-2, Table 3-3, or Table 3-4 was loaded into a cartridge, and was subjected to evaluations for irregular ejection and intermittent ejection stability. In Example 1-36, the evaluations were performed based on the ejection property evaluation of the first liquid composition 4 in Example 1-4 and the result of the second liquid composition 2 in Example 1-35.

The evaluations were performed by setting the cartridge loaded with the first liquid composition or the second liquid composition in an inkjet recording apparatus (product name: "PIXUS TS203", manufactured by Canon Inc.) mounted with a liquid ejection head configured to eject ink with thermal energy.

The results of the evaluations are shown in Table 3-1, Table 3-2, Table 3-3, and Table 3-4.

### (Irregular Ejection Evaluation)

For each liquid composition, the above-mentioned inkjet recording apparatus was used to continuously record an A4 size solid image having a recording duty of 100% on three transparent PET films (COSMOSHINE A4100, Toyobo Co., Ltd.) each cut to an A4 size. After that, a nozzle check pattern was recorded on a transparent PET film (COSMOSHINE A4100, Toyobo Co., Ltd.) cut to an A4 size. The resultant nozzle check pattern was visually observed to determine the number of print positions with misregistration. The "irregular ejection" was evaluated in accordance with the following evaluation criteria.
A: The nozzle check pattern had no misregistration at any print position.
B: The nozzle check pattern had misregistration at 1 to 10 print positions.
C: The nozzle check pattern had misregistration at 11 or more print positions.

### (Intermittent Ejection Stability Evaluation)

For each liquid composition, the above-mentioned inkjet recording apparatus was used to record a solid image having a recording duty of 100% on one transparent PET film (COSMOSHINE A4100, Toyobo Co., Ltd.) cut to an A4 size, and the resultant was then left to stand for 30 minutes. Then, a nozzle check pattern was recorded on a transparent PET film (COSMOSHINE A4100, Toyobo Co., Ltd.) cut to an A4 size. The resultant nozzle check pattern was visually observed to determine the number of print positions with misregistration or print omission. The "intermittent ejection stability" was evaluated in accordance with the following evaluation criteria.
A: The nozzle check pattern had no misregistration or omission at any print position.
B: The nozzle check pattern had misregistration or omission at 1 to 10 print positions.
C: The nozzle check pattern had misregistration or omission at 11 or more print positions.

**Table 3-1**

| (Evaluation) | Examp le 1-1 | Examp le 1-2 | Examp le 1-3 | Examp le 1-4 | Examp le 1-5 | Examp le 1-6 | Examp le 1-7 | Examp le 1-8 | Examp le 1-9 | Examp le 1-10 | Examp le 1-11 | Examp le 1-12 |
|---|---|---|---|---|---|---|---|---|---|---|---|---|
| First liquid composition No. | 1 | 2 | 3 | 4 | 5 | 6 | 7 | 8 | 9 | 10 | 11 | 12 |
| Second liquid composition No. | - | - | - | - | - | - | - | - | - | - | - | - |
| Irregular ejection | A | A | A | A | A | A | A | A | A | A | A | B |
| Intermittent ejection stability | A | A | A | A | A | A | A | A | A | A | A | A |

**Table 3-2**

| (Evaluation) | Examp le 1-13 | Examp le 1-14 | Examp le 1-15 | Examp le 1-16 | Examp le 1-17 | Examp le 1-18 | Examp le 1-19 | Examp le 1-20 | Examp le 1-21 | Examp le 1-22 | Examp le 1-23 | Examp le 1-24 |
|---|---|---|---|---|---|---|---|---|---|---|---|---|
| First liquid composition No. | 13 | 14 | 15 | 16 | 17 | 18 | 19 | 20 | 21 | 22 | 23 | 24 |
| Second liquid composition No. | - | - | - | - | - | - | - | - | - | - | - | - |
| Irregular ejection | A | A | A | A | A | A | A | A | A | A | A | A |
| Intermittent ejection stability | A | A | A | B | A | A | A | A | A | A | A | A |

**Table 3-3**

| (Evaluation) | Examp le 1-25 | Examp le 1-26 | Examp le 1-27 | Examp le 1-28 | Examp le 1-29 | Examp le 1-30 | Examp le 1-31 | Examp le 1-32 | Examp le 1-33 | Examp le 1-34 | Examp le 1-35 | Examp le 1-36 |
|---|---|---|---|---|---|---|---|---|---|---|---|---|
| First liquid composition No. | 25 | 26 | 27 | 28 | 29 | 30 | - | - | - | - | - | 4 |
| Second liquid composition No. | - | - | - | - | - | - | 3 | 4 | 5 | 6 | 2 | 2 |
| Irregular ejection | B | A | A | A | A | A | A | A | A | A | A | A |
| Intermittent ejection stability | B | A | A | A | A | A | A | A | A | A | A | A |

**Table 3-4**

| (Evaluation) | Comparat ive Example 1-1 | Comparat ive Example 1-2 | Comparat ive Example 1-3 | Comparat ive Example 1-4 | Comparat ive Example 1-5 | Comparat ive Example 1-6 | Comparat ive Example 1-7 | Comparat ive Example 1-8 | Comparat ive Example 1-9 |
|---|---|---|---|---|---|---|---|---|---|
| First liquid composition No. | 31 | 32 | 33 | 34 | 35 | 36 | 37 | 38 | 39 |
| Second liquid composition No. | - | - | - | - | - | - | - | - | - |
| Irregular ejection | C | C | C | C | C | C | C | C | C |
| Intermittent ejection stability | C | C | A | A | A | A | C | C | C |

### <Evaluation of Stainability>

Cells were stained using each liquid composition. The stainability of a specimen stained using a liquid composition ejected by inkjet was compared to that of a specimen stained by applying the liquid composition with a pipette instead of inkjet ejection.

In the evaluation of the stainability, two biological samples were prepared for each of Examples and Comparative Examples.

The two biological samples were similarly subjected to a deparaffinization treatment step for the biological sample, an antigen activation treatment step for the biological sample, and a blocking treatment step for the biological sample as described below.

### (1) Deparaffinization Treatment of Biological Sample

a) The biological sample was immersed in a container having placed therein a xylene substitute Clear Plus (Falma), and the whole was left at rest at room temperature for 5 minutes. In addition, this operation was performed twice.
b) The sample was immersed in a container having placed therein 99.5% ethanol (Kishida Chemical Co., Ltd.), and the whole was left at rest at room temperature for 3 minutes. In addition, this operation was performed twice.
c) The sample was immersed in a container having placed therein 95% ethanol, and the whole was left at rest at room temperature for 5 minutes. In addition, this operation was performed twice.
d) The sample was immersed in a container having placed therein pure water, and the whole was left at rest at room temperature for 1 minute.

### (2) Antigen Activation Treatment of Biological Sample

a) The biological sample was immersed in a "Target Retrieval Solution, pH 9.0" (Dako) solution that had been heated to from 96°C to 98°C, and was heated for 40 minutes. After the heating, the resultant was left standing to cool to room temperature.
b) The biological sample was immersed in a container having placed therein the TBS buffer, and the whole was left at rest at room temperature for 3 minutes. In addition, this operation was performed twice.

### (3) Blocking Treatment of Biological Sample

a) 100 µL of a peroxidase blocking reagent (Peroxidase-Blocking Solution Dako REAL (Dako)) was dropped onto the biological sample, and the whole was left at rest in a moist chamber for 5 minutes.
b) The biological sample was immersed in a container having placed therein the TBS buffer, and the whole was left at rest at room temperature for 3 minutes. In addition, this operation was performed twice.

Subsequent steps were performed by methods different for each Example.

For Examples 2-1 to 2-30 and Comparative Examples 2-1 to 2-9, the following steps were performed in common.

### (1) Application of First Liquid Composition to Biological Sample

a) For each of the two biological samples, a 1 cm² frame was created with a PAP pen (Liquid Blocker, manufactured by Daido Sangyo Co., Ltd.) so as to surround the biological sample portion.
b) For one of the biological samples, 10 µL of the first liquid composition specified in each Example/Comparative Example was dropped with a pipette inside the frame created with the PAP pen. After the dropping, the whole was left at rest in a moist chamber for 60 minutes.
   For the other biological sample, the first liquid composition specified in each Example/Comparative Example was dropped through ejection by inkjet recording apparatus. Specifically, a cartridge loaded with the first liquid composition was mounted on an inkjet recording apparatus (product name: "PIXUS TS203", manufactured by Canon Inc.) and the first liquid composition was ejected. Under conditions set in advance so that, when water was ejected, its amount was 10 µL per 1 cm², the first liquid composition was dropped inside the frame created with the PAP pen. After the dropping, the whole was left at rest in a moist chamber for 60 minutes.
c) After a lapse of a predetermined period of time, the biological sample was immersed in a container having placed therein the TBS buffer, and the whole was left at rest at room temperature for 3 minutes. In addition, this operation was performed twice. In subsequent steps, the two biological samples in each Example were similarly treated.

After the above-mentioned steps, the subsequent steps were performed in different manners for Examples 2-1 to 2-30 and Comparative Examples 2-1 to 2-9.

In each of Examples 2-1, 2-2, and 2-9 to 2-30, and Comparative Examples 2-1 to 2-9, the following steps were performed.

### (2) Application of Second Liquid Composition

a) For the biological sample, 50 µL of the second liquid composition was dropped inside the frame created with the PAP pen, and the whole was left at rest in a moist chamber for 30 minutes.
b) The biological sample was immersed in a container having placed therein the TBS buffer, and the whole was left at rest at room temperature for 3 minutes. In addition, this operation was performed twice.

### (3) Application of Third Liquid Composition

a) For the biological sample, 50 µL, of the third liquid composition was dropped inside the frame created with the PAP pen, and the whole was left at rest in a moist chamber for 5 minutes.
b) The biological sample was immersed in a container having placed therein water that had been subjected to pressure filtration through a sterilizing filter having a pore size of 0.22 µm, and the whole was left at rest at room temperature for 3 minutes. In addition, this operation was performed twice.

### (4) Observation

Microscopic observation was performed. BZ-X810 (Keyence Corporation) was used as a microscope. An image was acquired using a 40× objective lens adapted to bright-field observation.

In each of Examples 2-3, 2-7, and 2-8, the following steps were performed.

### (2) Observation

Fluorescence microscopic observation was performed. BZ-X810 (Keyence Corporation) was used as a microscope.

In each of Examples 2-3 and 2-7, a fluorescence image of the biological sample was acquired using a 40× objective lens adapted to fluorescence observation and a fluorescence filter unit BZ-X Filter GFP OP-87763 (Keyence Corporation, excitation wavelength: 470 nm, detection wavelength: 525 nm). Next, a phase-contrast image of the biological sample was acquired using an objective lens adapted to phase-contrast observation and a capacitor for phase-contrast observation. Next, a green substitute color and a gray substitute color were applied to the acquired fluorescence image and phase-contrast image, respectively. After that, the two images were superimposed by an additive composition method to generate one composite image.

In Example 2-8, a fluorescence image of the biological sample was acquired using a 40× objective lens adapted to fluorescence observation and a fluorescence filter unit BZ-X Filter TRITC OP-87764 (Keyence Corporation, excitation wavelength: 545 nm, detection wavelength: 605 nm). Next, a phase-contrast image of the biological sample was acquired using an objective lens adapted to phase-contrast observation and a capacitor for phase-contrast observation. Next, an orange substitute color and a gray substitute color were applied to the acquired fluorescence image and phase-contrast image, respectively. After that, the two images were superimposed by an additive composition method to generate one composite image.

In Example 2-4, the following steps were performed.

### (2) Addition of Second Liquid Composition

a) For the biological sample, 10 µL of the second liquid composition specified in each Example was dropped inside the frame created with the PAP pen, and the whole was left at rest in a moist chamber for 60 minutes.
b) The biological sample was immersed in a container having placed therein the TBS buffer, and the whole was left at rest at room temperature for 3 minutes. In addition, this operation was performed twice.

### (3) Observation

Fluorescence microscopic observation was performed. BZ-X810 (Keyence Corporation) was used as a microscope. A fluorescence image of the biological sample was acquired using a 40× objective lens adapted to fluorescence observation and a fluorescence filter unit BZ-X Filter GFP OP-87763 (Keyence Corporation, excitation wavelength: 470 nm, detection wavelength: 525 nm). Next, a phase-contrast image of the biological sample was acquired using an objective lens adapted to phase-contrast observation and a capacitor for phase-contrast observation. Next, a green substitute color and a gray substitute color were applied to the acquired fluorescence image and phase-contrast image, respectively. After that, the two images were superimposed by an additive composition method to generate one composite image.

In each of Examples 2-5 and 2-6, the following steps were performed.

For Examples 2-5 and 2-6, no second liquid composition is specified.

### (2) Application of Third Liquid Composition

a) For the biological sample, 50 µL of the third liquid composition was dropped inside the frame created with the PAP pen, and the whole was left at rest in a moist chamber for 5 minutes.
b) The biological sample was immersed in a container having placed therein water that had been subjected to pressure filtration through a sterilizing filter having a pore size of 0.22 µm, and the whole was left at rest at room temperature for 3 minutes. In addition, this operation was performed twice.

### (3) Observation

Microscopic observation was performed. BZ-X810 (Keyence Corporation) was used as a microscope. An image was acquired using a 40× objective lens adapted to bright-field observation.

For Examples 2-31 to 2-35, the following steps were performed in common as steps after the "blocking treatment of biological sample" described above.

### (1) Application of First Liquid Composition to Biological Sample

a) For each of the two biological samples, a 1 cm² frame was created with a PAP pen (Liquid Blocker, manufactured by Daido Sangyo Co., Ltd.) so as to surround the biological sample portion.
b) For each of the two biological samples, 10 µL of the first liquid composition specified in each Example was dropped with a pipette inside the frame created with the PAP pen. After the dropping, the whole was left at rest in a moist chamber for 60 minutes.
c) After a lapse of a predetermined period of time, the biological sample was immersed in a container having placed therein the TBS buffer, and the whole was left at rest at room temperature for 3 minutes. In addition, this operation was performed twice.

### (2) Application of Second Liquid Composition to Biological Sample

a) For one of the biological samples, 10 µL of the second liquid composition specified in each Example was dropped with a pipette inside the frame created with the PAP pen. After the dropping, the whole was left at rest in a moist chamber for 60 minutes.
   For the other biological sample, the second liquid composition specified in each Example was dropped through ejection by inkjet recording apparatus. Specifically, a cartridge loaded with the first liquid composition was mounted on an inkjet recording apparatus (product name: "PIXUS TS203", manufactured by Canon Inc.) and the first liquid composition was ejected. Under conditions set in advance so that, when water was ejected, its amount was 10 µL per 1 cm², the second liquid composition was dropped inside the frame created with the PAP pen. After the dropping, the whole was left at rest in a moist chamber for 60 minutes.
b) After a lapse of a predetermined period of time, the biological sample was immersed in a container having placed therein the TBS buffer, and the whole was left at rest at room temperature for 3 minutes. In addition, this operation was performed twice. In subsequent steps, the two biological samples in each Example were similarly treated.

After the above-mentioned steps, the steps were performed in different manners for Examples 2-31 to 2-35.

In Example 2-31, the following steps were performed.

### (3) Application of Third Liquid Composition

a) For the biological sample, 50 µL of the third liquid composition specified in each Example was dropped inside the frame created with the PAP pen, and the whole was left at rest in a moist chamber for 5 minutes.
b) After a lapse of a predetermined period of time, the biological sample was immersed in a container having placed therein the TBS buffer, and the whole was left at rest at room temperature for 3 minutes. In addition, this operation was performed twice.

### (4) Observation

Fluorescence microscopic observation was performed. BZ-X810 (Keyence Corporation) was used as a microscope. A fluorescence image of the biological sample was acquired using a 40× objective lens adapted to fluorescence observation and a fluorescence filter unit BZ-X Filter GFP OP-87763 (Keyence Corporation, excitation wavelength: 470 nm, detection wavelength: 525 nm). Next, a phase-contrast image of the biological sample was acquired using an objective lens adapted to phase-contrast observation and a capacitor for phase-contrast observation. Next, a green substitute color and a gray substitute color were applied to the acquired fluorescence image and phase-contrast image, respectively. After that, the two images were superimposed by an additive composition method to generate one composite image.

In Example 2-32, the following steps were performed.

### (3) Application of Third Liquid Composition

a) For the biological sample, 50 µL of the third liquid composition was dropped inside the frame created with the PAP pen, and the whole was left at rest in a moist chamber for 30 minutes.
b) The biological sample was immersed in a container having placed therein water that had been subjected to pressure filtration through a sterilizing filter having a pore size of 0.22 µm, and the whole was left at rest at room temperature for 3 minutes. In addition, this operation was performed twice.

### (4) Observation

Microscopic observation was performed. BZ-X810 (Keyence Corporation) was used as a microscope. An image was acquired using a 40× objective lens adapted to bright-field observation.

In each of Examples 2-33 to 2-35, the following steps were performed.

### (3) Observation

Fluorescence microscopic observation was performed. BZ-X810 (Keyence Corporation) was used as a microscope.

In each of Examples 2-33 and 2-35, a fluorescence image of the biological sample was acquired using a 40× objective lens adapted to fluorescence observation and a fluorescence filter unit BZ-X Filter GFP OP-87763 (Keyence Corporation, excitation wavelength: 470 nm, detection wavelength: 525 nm). Next, a phase-contrast image of the biological sample was acquired using an objective lens adapted to phase-contrast observation and a capacitor for phase-contrast observation. Next, a green substitute color and a gray substitute color were applied to the acquired fluorescence image and phase-contrast image, respectively. After that, the two images were superimposed by an additive composition method to generate one composite image.

In Example 2-34, a fluorescence image of the biological sample was acquired using a 40× objective lens adapted to fluorescence observation and a fluorescence filter unit BZ-X Filter TRITC OP-87764 (Keyence Corporation, excitation wavelength: 545 nm, detection wavelength: 605 nm). Next, a phase-contrast image of the biological sample was acquired using an objective lens adapted to phase-contrast observation and a capacitor for phase-contrast observation. Next, an orange substitute color and a gray substitute color were applied to the acquired fluorescence image and phase-contrast image, respectively. After that, the two images were superimposed by an additive composition method to generate one composite image.

For Example 2-36, the following steps were performed in common as steps after the "blocking treatment of biological sample" described above.

### (1) Application of First Liquid Composition to Biological Sample

a) For each of the two biological samples, a 1 cm² frame was created with a PAP pen (Liquid Blocker, manufactured by Daido Sangyo Co., Ltd.) so as to surround the biological sample portion.
b) For one of the biological samples, 10 µL of the first liquid composition specified in each Example/Comparative Example was dropped with a pipette inside the frame created with the PAP pen. After the dropping, the whole was left at rest in a moist chamber for 60 minutes.
   For the other biological sample, the first liquid composition specified in each Example was dropped through ejection by inkjet recording apparatus. Specifically, a cartridge loaded with the first liquid composition was mounted on an inkjet recording apparatus (product name: "PIXUS TS203", manufactured by Canon Inc.) and the first liquid composition was ejected. Under conditions set in advance so that, when water was ejected, its amount was 10 µL per 1 cm², the first liquid composition was dropped inside the frame created with the PAP pen. After the dropping, the whole was left at rest in a moist chamber for 60 minutes.
c) After a lapse of a predetermined period of time, the biological sample was immersed in a container having placed therein the TBS buffer, and the whole was left at rest at room temperature for 3 minutes. In addition, this operation was performed twice.

### (2) Application of Second Liquid Composition to Biological Sample

b) For the biological sample to which the first liquid composition had been applied with a pipette, 10 µL of the second liquid composition specified in each Example was dropped with a pipette inside the frame created with the PAP pen. After the dropping, the whole was left at rest in a moist chamber for 60 minutes.
   For the biological sample onto which the first liquid composition had been dropped through ejection by inkjet, the second liquid composition specified in each Example was dropped through ejection by inkjet recording apparatus. Specifically, a cartridge loaded with the first liquid composition was mounted on an inkjet recording apparatus (product name: "PIXUS TS203", manufactured by Canon Inc.) and the first liquid composition was ejected. Under conditions set in advance so that, when water was ejected, its amount was 10 µL per 1 cm², the second liquid composition was dropped inside the frame created with the PAP pen. After the dropping, the whole was left at rest in a moist chamber for 60 minutes.
c) After a lapse of a predetermined period of time, the biological sample was immersed in a container having placed therein the TBS buffer, and the whole was left at rest at room temperature for 3 minutes. In addition, this operation was performed twice.

### (3) Observation

Fluorescence microscopic observation was performed. BZ-X810 (Keyence Corporation) was used as a microscope. A fluorescence image of the biological sample was acquired using a 40× objective lens adapted to fluorescence observation and a fluorescence filter unit BZ-X Filter GFP OP-87763 (Keyence Corporation, excitation wavelength: 470 nm, detection wavelength: 525 nm). Next, a phase-contrast image of the biological sample was acquired using an objective lens adapted to phase-contrast observation and a capacitor for phase-contrast observation. Next, a green substitute color and a gray substitute color were applied to the acquired fluorescence image and phase-contrast image, respectively. After that, the two images were superimposed by an additive composition method to generate one composite image.

Based on the results of observation, the "stainability" was evaluated in accordance with the following evaluation criteria.
A: As compared to the specimen stained by applying the liquid composition with a pipette, the specimen stained using the liquid composition ejected by the inkjet system had comparable stainability.
B: As compared to the specimen stained by applying the liquid composition with a pipette, the specimen stained using the liquid composition ejected by the inkjet system had inferior stainability, but caused no trouble with observation.
C: As compared to the specimen stained by applying the liquid composition with a pipette, the specimen stained using the liquid composition ejected by the inkjet system had weak stainability, and caused trouble with observation.

The results of the evaluations are shown in Table 4-1, Table 4-2, Table 4-3, and Table 4-4.

**Table 4-1**

| (Evaluation) | Examp le 2-1 | Examp le 2-2 | Examp le 2-3 | Examp le 2-4 | Examp le 2-5 | Examp le 2-6 | Examp le 2-7 | Examp le 2-8 | Examp le 2-9 | Examp le 2-10 | Examp le 2-11 | Examp le 2-12 |
|---|---|---|---|---|---|---|---|---|---|---|---|---|
| First liquid composition No. | 1 | 2 | 3 | 4 | 5 | 6 | 7 | 8 | 9 | 10 | 11 | 12 |
| Second liquid composition No. | 1 | 1 | None | 2 | None | None | None | None | 1 | 1 | 1 | 1 |
| Third liquid composition No. | 1 | 1 | None | None | 1 | 2 | None | None | 1 | 1 | 1 | 1 |
| Stainability | A | A | A | A | A | A | A | A | A | A | A | A |

**Table 4-2**

| (Evaluation) | Examp le 2-13 | Examp le 2-14 | Examp le 2-15 | Examp le 2-16 | Examp le 2-17 | Examp le 2-18 | Examp le 2-19 | Examp le 2-20 | Examp le 2-21 | Examp le 2-22 | Examp le 2-23 | Examp le 2-24 |
|---|---|---|---|---|---|---|---|---|---|---|---|---|
| First liquid composition No. | 13 | 14 | 15 | 16 | 17 | 18 | 19 | 20 | 21 | 22 | 23 | 24 |
| Second liquid composition No. | 1 | 1 | 1 | 1 | 1 | 1 | 1 | 1 | 1 | 1 | 1 | 1 |
| Third liquid composition No. | 1 | 1 | 1 | 1 | 1 | 1 | 1 | 1 | 1 | 1 | 1 | 1 |
| Stainability | A | A | B | A | A | A | A | A | A | A | A | A |

**Table 4-3**

| (Evaluation) | Examp le 2-25 | Examp le 2-26 | Examp le 2-27 | Examp le 2-28 | Examp le 2-29 | Examp le 2-30 | Examp le 2-31 | Examp le 2-32 | Examp le 2-33 | Examp le 2-34 | Examp le 2-35 | Examp le 2-36 |
|---|---|---|---|---|---|---|---|---|---|---|---|---|
| First liquid composition No. | 25 | 26 | 27 | 28 | 29 | 30 | 1 | 1 | 1 | 1 | 4 | 4 |
| Second liquid composition No. | 1 | 1 | 1 | 1 | 1 | 1 | 3 | 4 | 5 | 6 | 2 | 2 |
| Third liquid composition No. | 1 | 1 | 1 | 1 | 1 | 1 | 3 | 1 | None | None | None | None |
| Stainability | A | A | A | B | A | A | A | A | A | A | A | A |

**Table 4-4**

| (Evaluation) | Comparat ive Example 2-1 | Comparat ive Example 2-2 | Comparat ive Example 2-3 | Comparat ive Example 2-4 | Comparat ive Example 2-5 | Comparat ive Example 2-6 | Comparat ive Example 2-7 | Comparat ive Example 2-8 | Comparat ive Example 2-9 |
|---|---|---|---|---|---|---|---|---|---|
| First liquid composition No. | 31 | 32 | 33 | 34 | 35 | 36 | 37 | 38 | 39 |
| Second liquid composition No. | 1 | 1 | 1 | 1 | 1 | 1 | 1 | 1 | 1 |
| Third liquid composition No. | 1 | 1 | 1 | 1 | 1 | 1 | 1 | 1 | 1 |
| Stainability | A | B | A | A | A | A | C | C | B |

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A staining method comprising ejecting, from a liquid ejection head of an inkjet system, a liquid composition containing: a ligand protein having specificity for a target in a biological sample; and a surfactant represented by the following formula (1), to thereby apply the liquid composition to the biological sample. 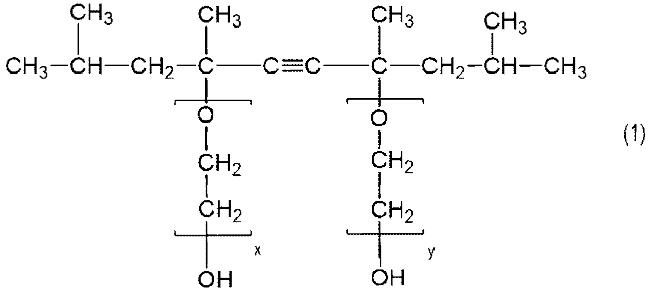 In the formula (1), "x" and "y" satisfy a relationship of 1.0≤x+y≤30.0.

2. The staining method according to claim 1, wherein the ligand protein comprises an antibody or an antibody fragment.

3. The staining method according to claim 1 or 2, wherein the ligand protein is modified with at least one selected from the group consisting of: biotin; an enzyme; a fluorescent dye; and a fluorescent protein.

4. The staining method according to any one of claims 1 to 3,
wherein the ligand protein is modified with an enzyme, and
wherein the staining method further comprises applying a substrate for the enzyme to the biological sample having the liquid composition applied thereto.

5. The staining method according to any one of claims 1 to 4, wherein the liquid composition further contains at least one selected from the group consisting of: bovine serum albumin; and casein.

6. The staining method according to any one of claims 1 to 5, wherein a content of the ligand protein in the liquid composition is 0.001 mass% or more and 3 mass% or less with respect to a total mass of the liquid composition.

7. The staining method according to any one of claims 1 to 6, wherein a content of the surfactant in the liquid composition is 0.1 mass% or more and 3 mass% or less with respect to a total mass of the liquid composition.

8. The staining method according to any one of claims 1 to 7, wherein the liquid composition contains a water-soluble organic solvent.

9. The staining method according to claim 8, wherein the water-soluble organic solvent is at least one selected from the group consisting of: glycerin; dimethyl sulfoxide; and polyethylene glycol.

10. The staining method according to any one of claims 1 to 9, wherein the liquid ejection head includes a heat generating element configured to apply thermal energy to the liquid composition.

11. The staining method according to any one of claims 1 to 10, wherein, in the formula (1), "x" and "y" satisfy a relationship of 3.0≤x+y≤15.0.

12. The staining method according to any one of claims 1 to 11, further comprising applying, to the biological sample having the liquid composition applied thereto, a second liquid composition containing a second protein having specificity for the ligand protein.

13. The staining method according to claim 12, wherein the second protein is modified with at least one selected from the group consisting of: biotin; an enzyme; a fluorescent dye; and a fluorescent protein.

14. The staining method according to claim 13,
wherein the second protein is modified with an enzyme, and
wherein the staining method further comprises applying a chromogenic substrate for the enzyme with which the second protein is modified to the biological sample having the second liquid composition applied thereto.

15. A liquid composition for staining of a biological sample using an inkjet system, the liquid composition comprising:
a ligand protein having specificity for a target in the biological sample; and
a surfactant represented by the following formula (1): 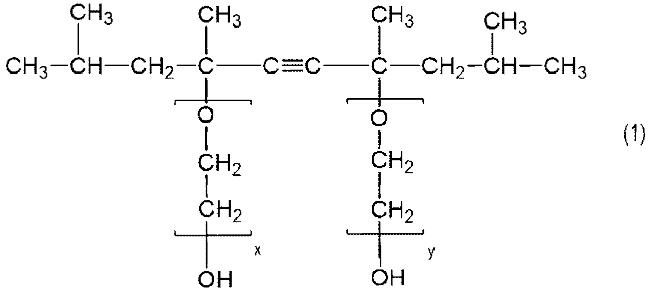 in the formula (1), "x" and "y" satisfy a relationship of 1.0≤x+y≤30.0.

16. A kit for staining of a biological sample using an inkjet system, the kit comprising a liquid composition containing:
a ligand protein having specificity for a target in the biological sample; and
a surfactant represented by the following formula (1): 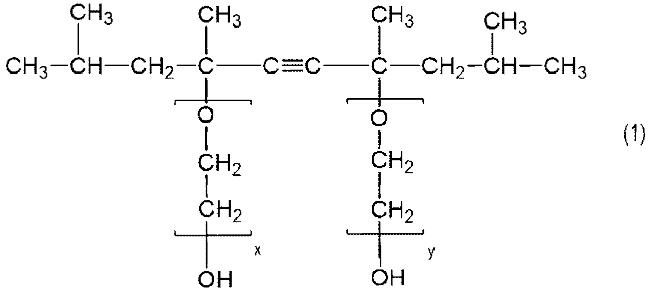 in the formula (1), "x" and "y" satisfy a relationship of 1.0≤x+y≤30.0.

17. The kit according to claim 16, further comprising a cartridge container configured to be mountable onto an ejection head of the inkjet system.
